# EUROPEAN PATENT SPECIFICATION

(11) **EP 3 558 748 B1**
(45) Date of publication and mention of the grant of the patent: **14.12.2022**
(21) Application number: 17885057.4
(22) Date of filing: 19.12.2017
(51) Int. Cl.: B60P 7/15

(54) **CARGO SUPPORT COMPRISING A LOCKING MECHANISM OF ECCENTER TYPE**
FRACHTSTÜTZE MIT EINEM VERRIEGELUNGSMECHANISMUS VOM EXZENTERTYP
SUPPORT DE MARCHANDISES COMPRENANT UN MÉCANISME DE VERROUILLAGE DE TYPE EXCENTRIQUE

(30) Priority: 21.12.2016 SE 1651698
(43) Date of publication of application: 30.10.2019
(73) Proprietor: Ergo Load AB, 534 50 Vara (SE)
(72) Inventor: PERSSON, Lennart, 534 94 Vara (SE); LITBORN, Claes, 441 57 Alingsås (SE)
(74) Representative: Zacco Sweden AB
(86) International application number: PCT/SE2017/051300
(87) International publication number: WO 2018/117951

(56) References cited:
- EP-A1- 3 098 114
- EP-A2- 0 165 594
- EP-A2- 3 000 655
- WO-A1-2015/034424
- WO-A1-2015/034424
- CH-A- 300 427
- DE-A1- 3 901 412
- DE-A1- 3 901 412

## Description

The present invention concerns a locking mechanism for cargo support when handling cargo in a truck and comprising a telescopic upright one movable telescope part of which is manually actuatable by means of an articulately journalled handle, which via a link connection is coupled together to said movable telescope part by eccentric locking, so-called over-centre locking.

The known solutions to locking mechanisms for cargo supports of the type mentioned lack possibility to assume a so-called idle position. By, for instance, WO 2015/034424 A1, which represents the closest prior art, a cargo pillar for vehicle load is previously known and which comprises a locking mechanism having an articulately journalled control handle of the above-mentioned kind. The control handle is in that connection freely movable, which means that it strives to move downward and be turned to risk hurting persons who handle the support if, e.g., the handle is in turned-up position, however not in the locking position but freely can be actuated in the desired direction when the same is turned. It may then fall down by itself and in that connection hurt the person who is present under the handle. In addition, in said unlocked idle position, the upper portion of the support strives to fall down and no desired initial support is obtained against, e.g., the ceiling of a vehicle in question so that the support then does not fall over. EP 3 098 114 A1 discloses another cargo support comprising a locking mechanism according to the state of the art.

Therefore, the main object of the present invention is primarily to, by simple and reliably working means, solve, among others, the problems mentioned above, which provides a cargo support having a long service life, which affords a reliable cargo handling and which reduces the number of working moments and which makes the remaining working moments less burdening for those handling said cargo supports, such as, e.g., truck or lorry drivers.

Said object is achieved by means of a cargo support comprising a locking mechanism according to the appended claims.

The invention is described in the following in the form of a preferred embodiment example, reference being made to the accompanying drawings, in which
Fig. 1 shows a side view of a load support in locked position on the platform body of a truck,

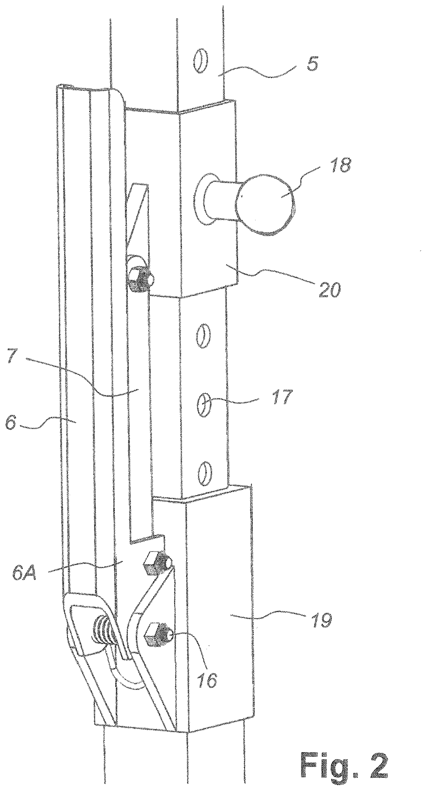

Fig. 2 shows in an angled, lateral position the locking mechanism of the load support in question in a locked, clamping position with the handle thereof in shown, turned-up, secured position,
Fig. 3 shows the locking mechanism in an unlocked position with the handle in lowered, unactuated position, and

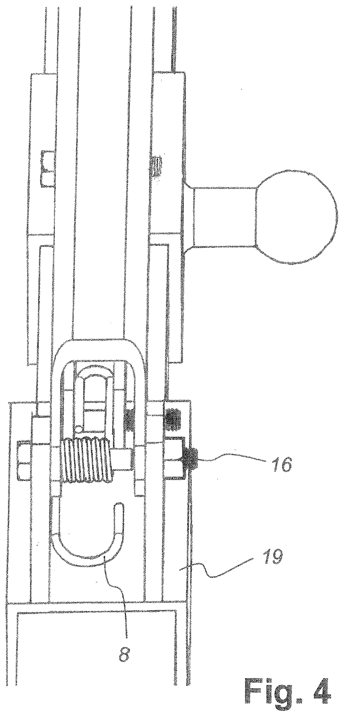

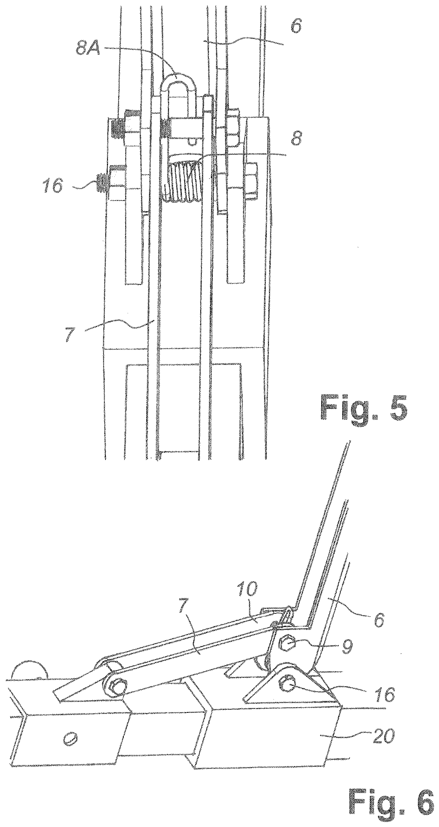

Figs. 4-6 show detailed pictures of the locking mechanism and the actuation spring thereof, and links in locked position and in unactuated position, respectively.

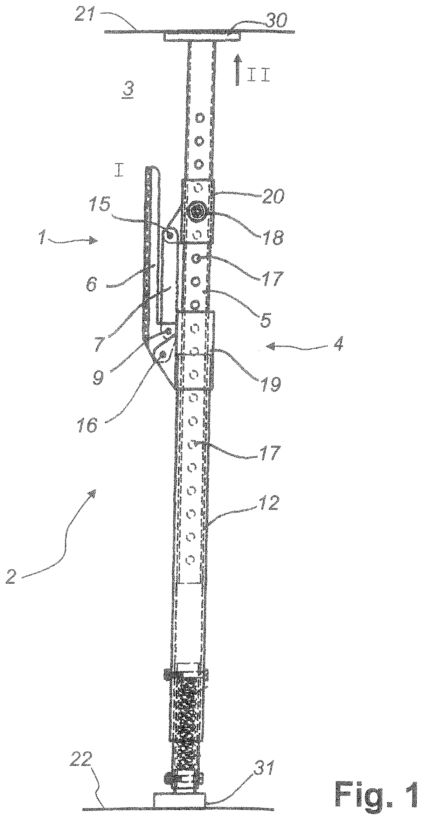

A locking mechanism 1 for a cargo support 2 when handling cargo in a truck 3 and comprising a telescopic upright 4 one movable telescope part 5 of which is manually actuatable by means of an articulately journalled handle 6, which via a link connection 7 is coupled together to said movable telescope part 5 by eccentric locking, so-called over-centre locking is shown in Fig. 1 in locked position I. In that connection, the handle 6 is arranged according to the invention to be resiliently actuatable to be brought toward a locking position I at the same time as the movable telescope part 5 is actuated thereby to be brought to a projecting position II.

A spring 8 is in that connection arranged to be received internally hidden by said handle 6, when the handle 6 is brought to the locking locking position I thereof. This spring 8 is preferably formed of a screw spring one spring end 8A of which is arranged to interact with a bearing shaft 9 of the handle 6 and a link end 10 of said link connection 7 and with a part 11, respectively, of a fixed part 12 of the telescope upright 4. Between the handle 6 and said movable telescope part 5, there extends a movably mounted link 7, which in the example shown is carried out as a double link, the bearing mounting 9 of which between the handle 6 and the link 7 is arranged to be able to pass an imaginary line between a bearing mounting 16 between the handle 6 and the movable telescope part 5 and between a bearing mounting 15, respectively, between the link 7 and the movable telescope part 5 for the locking I and opening III, respectively, positions of the locking mechanism 1. A said spring 8 is arranged to be threaded and received on a bearing shaft 16 of one end 6A of the handle 6. Thereby, the handle 6 is resiliently actuatable to always be brought toward the locking position I thereof.

The telescope upright 4 is arranged longitudinally adjustable and lockable in intended desired longitudinal position by hole and lock pin system 17, 18 and is formed of at least paired telescope parts 5, 12 having a square profile as well as sleeves 19, 20 surrounding the profile for fastening to fixed 12 and movable 5, respectively, telescope part and with the handle 6 arranged to act between said sleeves 19, 20, as well as that said respective telescope parts 12, 5 carry pressure distributing end stoppers 30, 31 for the telescope upright 4 preferably of rubber.

The interacting eccentric locking and resilient actuation of the locking mechanism is arranged to actuate the movable telescope part 5 to a constantly projecting position when said eccentric locking position is achieved by means of said locking mechanism 1.

The spring 8 is arranged to actuate the locking mechanism 1 by a portion so that said locking position I first is achieved and that then the locking position I of the locking mechanism is retained with the handle 6 in the raised opening position prepared for gripping and intended for lowering.

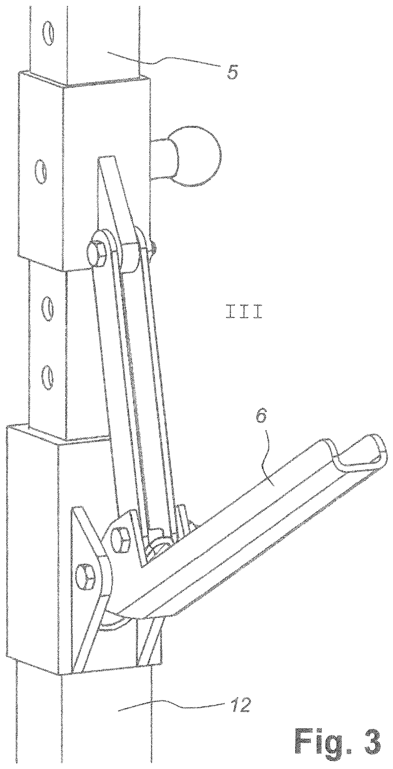

Thanks to an eccentric locking of the locking mechanism 1, however without any racks or preset length, but with an articulately journalled handle 6, which is provided with a return spring 8, the support is arranged so that it can be brought to stand by itself without any manual clamping operation. The spring 8 of the handle 6 makes that the handle 6 always turns over into eccentric position and without any extra manual power, the inside profile, the movable telescoping profile 5, is pressed upward and makes contact with the ceiling 21 and that sufficient contact and friction between the upper end stopper 30 of the profile 5, which stopper preferably consists of rubber, and the ceiling 21 is achieved, whereby the cargo support 2 remains in standing position and does not fall over. Simultaneously, the handle 6 is retained in raised position, as is shown in Fig. 3, whereby risk of hurting the user decreases.

The known solutions available on the market to secure cargo by a support are all lacking the possibility of an idle position since all locks are lacking both return spring and eccentric locking. An eccentric locking implies a machine part that rotates on a shaft which does not go through its centre (excentres). When the handle is rotated over its shaft, there is brought about that the interior of the telescope is displaced and by the expanding profiles, the support is locked between floor 22 and ceiling 21. In the handle unit, an adjusting bolt is included, which makes that the support is preset to be in correct position at all times on the truck platform body in question. It is nevermore needed to make length adjustment upon each securing occasion, as in other supports. All cargo supports on the market have rack principles or gas spring. The rack principles always imply manual fitting of length and also large risk of crushing since nothing holds the inner tube in place. Supports having gas spring are tightened by priming the gas spring first and it takes about 750 N to tighten the support. The gas spring also makes that at cold times, the power of the support decreases. The support is manufactured from aluminium and becomes light, and by eccentric locking, the locking torque becomes maximum 100 N manual power to achieve the same compressive force of about 1000 N. No known support has an idle position which makes that the support is standing fixed vertically when it is not used, e.g., between two working moments. Thus, the support does not fall but is standing in place. The return spring of the handle makes that the handle always turns into eccentric position and thereby the inside profile is kept in a projected position. Rubber-faced end stoppers 30 contact the ceiling 21 and sufficient friction will arise so that the support remains in a standing position and does not fall. Other supports have to be primed/clamped by hand power movement to be standing fixed between the working positions or be laid down on the floor.

Thus, the cargo support according to the invention solves the problem of securing load and with a lower weight, it becomes a lighter working tool. Without adjustment on each occasion, time is saved and the eccentric locking locks and generates at least 100 N compressive force by small manual power. The return spring always holds the support in a certain load and the support does not fall when it is not used and then reduces the number of clamping moments by 50 %.

The return spring-loaded eccentric locking handle makes that there always will be a certain pressure upward on the inside profile 5 and that it always is under a certain load, which makes that the support always is held in place without a further working moment, i.e., a clamping once again only to get the support in an idle position when it is not used. It becomes easy to move the support and commence using it since there is not needed to carry out a full manoeuvre moment to release the support. The handle is brought somewhat downward by very little power when the inside profile is pulled in very easily when the handle runs over its eccentric shaft and the support can be used.

When the handle/support is in an idle position, it is accordingly possible to bring the handle to a locked position, i.e., upward, and downward so that the inside profile is pulled in and the entire support becomes released so that it no longer has contact both with floor and ceiling and thereby is possible to move.

The function and nature of the invention should have been clearly understood from the above-mentioned and also with knowledge of what is shown in the drawings but the invention is naturally not limited to the embodiments described above and shown in the accompanying drawings. Modifications are feasible, particularly as for the nature of the different parts, or by using an equivalent technique, without departing from the protection area of the invention, such as it is defined in the claims.

## Claims

1. Cargo support (2) comprising a locking mechanism (1) for handling cargo in a truck (3), said cargo support (2) further comprising a telescopic upright (4), one movable telescope part (5) of which is manually actuatable by means of an articulately journalled handle (6), which via a link connection (7) is coupled together to said movable telescope part (5) by eccentric locking, so-called over-centre locking, wherein the handle (6) is resiliently actuatable to be brought toward a locking position (I) at the same time as the movable telescope part (5) is actuated thereby to be brought to a projecting position (II), wherein between the handle (6) and said movable telescope part (5), there extends a movably mounted link (7) the bearing mounting of which between the handle (6) and the link (7) is arranged to be able to pass an imaginary line between the bearing mounting between the handle and the movable telescope part and between the bearing mounting between the link and the movable telescope part, respectively, for locking (I) and opening (III), respectively, positions of the locking mechanism (1), the cargo support being **characterised in that** a spring (8) is arranged to be received internally hidden by said handle (6), when the handle (6) is brought to the locking position (I) thereof, wherein the spring (8) is formed of a screw spring, one spring end (8A) of which is arranged to interact with a bearing shaft (9) of the handle (6) and one link end (10), and with a part (11) of a fixed part (12) of the telescope upright (4), respectively, and wherein the spring (8) is threaded and received on a bearing shaft (16) of one end (6A) of the handle (6).

2. Cargo support according to any one of the preceding claims, **characterized in that** the telescope upright (4) is arranged longitudinally adjustable and lockable in intended desired longitudinal position by hole and lock pin system (17, 18).

3. Cargo support according to any one of the preceding claims, **characterized in that** the interacting eccentric locking and resilient actuation of the locking mechanism is arranged to actuate the movable telescope part (5) to a constantly projecting position (II) when said eccentric locking position (I) is achieved by means of said locking mechanism (1).

4. Cargo support according to claim 2, **characterized in that** the spring (8) is arranged to actuate the locking mechanism (1) by a portion so that said locking position (I) first is achieved and that then the locking position (I) of the locking mechanism is retained with the handle (6) in the raised opening position (III) prepared for gripping and intended for lowering.

5. Cargo support according to any one of the preceding claims, **characterized in that** the handle (6) is resiliently actuatable to always be brought toward the locking position (I) thereof.

6. Cargo support according to any one of the preceding claims, **characterized in that** the telescope upright (4) is formed of at least paired telescope parts (4, 5) having a square profile as well as sleeves (19, 20) surrounding the profile for fastening to fixed (12) and movable (5), respectively, telescope part and with the handle (6) arranged to act between said sleeves (19, 20), as well as that said respective telescope parts (4, 5) carry pressure distributing end stoppers (30, 31) for the telescope upright (4).

## Patentansprüche

1. Frachtstütze (2) umfassend einen Verriegelungsmechanismus (1) zur Handhabung von Fracht in einem Lastkraftwagen (3), indem die Frachtstütze (2) weiter einen teleskopischen Pfosten (4) umfasst, wovon ein beweglicher Teleskopteil (5) mittels eines gelenkig gelagerten Griffs (6) manuell betätigbar ist, der über ein Verbindungsglied (7) durch eine Exzenterverriegelung, eine sogenannte Verknieung, mit dem beweglichen Teleskopteil (5) zusammengekoppelt ist, wobei der Griff (6) nachgiebig betätigbar ist, um gegen eine Verriegelungsposition (I) gebracht zu werden gleichzeitig damit, dass der bewegliche Teleskopteil (5) betätigt wird, um dadurch in eine vorspringende Position (II) gebracht zu werden, wobei ein beweglich montiertes Bindeglied (7) sich zwischen dem Griff (6) und dem beweglichen Teleskopteil (5) erstreckt, indem die Lagermontierung des Bindeglieds zwischen dem Griff (6) und dem Bindeglied (7) dafür eingerichtet ist, an einer gedachten Linie jeweils zwischen der Lagermontierung zwischen dem Griff und dem beweglichen Teleskopteil und zwischen der Lagermontierung zwischen dem Bindeglied und dem beweglichen Teleskopteil vorbeikommen kann, zum jeweiligen Verriegeln (I) und Öffnen (III) von Positionen des Verriegelungsmechanismus (1), indem die Frachtstütze **dadurch gekennzeichnet ist, dass** eine Feder (8) dafür eingerichtet ist, innenliegend verdeckt durch den Griff (6) aufgenommen zu werden, wenn der Griff (6) in die Verriegelungsposition (I) davon gebracht wird, wobei die Feder (8) von einer Schraubenfeder gebildet ist, wovon ein Federende (8A) dafür eingerichtet ist, jeweils mit einer Lagerwelle (9) von dem Griff (6) und einem Bindegliedende (10) und mit einem Teil (11) eines festen Teils (12) des Teleskoppfostens (4) zusammenzuwirken, und wobei die Feder (8) ein Gewinde aufweist und auf einer Lagerwelle (16) eines Ende (6A) des Griffs (6) aufgenommen ist.

2. Frachtstütze nach einem der vorgehenden Ansprüche, **dadurch gekennzeichnet, dass** der Teleskoppfosten (4) in einer beabsichtigten gewünschten längslaufenden Position durch ein Loch- und Arretierstiftsystem (17, 18) längslaufend verstellbar und verriegelbar angeordnet ist.

3. Frachtstütze nach einem der Ansprüche, **dadurch gekennzeichnet, dass** die zusammenwirkende Exzenterverriegelung und die nachgiebige Betätigung des Verriegelungsmechanismus dafür eingerichtet sind, den beweglichen Teleskopteil (5) zu einer kontant vorspringenden Position (II) zu betätigen, wenn die Exzenterverriegelungsposition (I) durch den Verriegelungsmechanismus (1) erreicht wird.

4. Frachtstütze nach Anspruch 2, **dadurch gekennzeichnet, dass** die Feder (8) zum Betätigen des Verriegelungsmechanismus (1) durch einen Teil eingerichtet ist, so dass die Verriegelungsposition (I) zuerst erreicht wird, und dass die Verriegelungsposition (I) des Verriegelungsmechanismus dann mit dem Griff (6) in der angehobenen Öffnungsposition (III) vorbereitet zum Greifen und zum Absenken gedacht festgehalten wird.

5. Frachtstütze nach einem der vorgehenden Ansprüche, **dadurch gekennzeichnet, dass** der Griff (6) nachgiebig betätigbar ist, um immer gegen die Verriegelungsposition (I) davon gebracht zu werden.

6. Frachtstütze nach einem der vorgehenden Ansprüche, **dadurch gekennzeichnet, dass** der Teleskoppfosten (4) von mindestens gepaarten Teleskopteilen (4, 5) mit einem viereckigen Profil sowie Hülsen (19, 20), die das Profil zum Befestigen am jeweils festen (12) und beweglichen (5) Teleskopteil umgeben, gebildet ist, und wobei der Griff (6) zum Wirken zwischen den Hülsen (19, 20) eingerichtet ist, sowie dass die jeweiligen Teleskopteile (4, 5) Druckverteilungsendverschlüssen (30, 31) für den Teleskoppfosten (4) tragen.

## Revendications

1. Support de cargaison (2) comprenant un mécanisme de verrouillage (1) pour manipuler une cargaison dans un camion (3), ledit support de cargaison (2) comprenant en outre un montant télescopique (4), une partie télescopique mobile (5) pouvant être actionnée manuellement au moyen d'une poignée tourillonnée de manière articulée (6) qui, par l'intermédiaire d'une connexion de liaison (7), est couplée ensemble à ladite partie télescopique mobile (5) par un verrouillage excentrique, dit verrouillage sur le centre, la poignée (6) pouvant être actionnée de manière élastique pour être amenée vers une position de verrouillage (I) en même temps que la partie télescopique mobile (5) est actionnée pour être amenée à une position de projection (II), dans lequel, entre la poignée (6) et ladite partie télescopique mobile (5), s'étend une liaison montée mobile (7) dont le montage de palier entre la poignée (6) et la liaison (7) est agencé pour pouvoir faire passer une ligne imaginaire respectivement entre le montage de palier situé entre la poignée et la partie télescopique mobile et entre le montage de palier situé entre la liaison et la partie télescopique mobile, pour respectivement verrouiller (I) et ouvrir (III) des positions du mécanisme de verrouillage (1), le support de cargaison étant **caractérisé en ce qu'un** ressort (8) est agencé pour être reçu intérieurement caché par ladite poignée (6), lorsque la poignée (6) est amenée à sa position de verrouillage (I), dans lequel le ressort (8) est formé d'un ressort à vis, dont une extrémité de ressort (8A) étant agencée pour interagir respectivement avec un arbre de palier (9) de la poignée (6) et une extrémité de liaison (10), et avec une partie (11) d'une partie fixe (12) du montant de télescope (4), et dans lequel le ressort (8) est fileté et reçu sur un arbre de palier (16) d'une extrémité (6A) de la poignée (6).

2. Support de cargaison selon l'une quelconque des revendications précédentes, **caractérisé en ce que** le montant télescopique (4) est disposé longitudinalement réglable et verrouillable dans une position longitudinale prévue et souhaitée par l'intermédiaire d'un système de broche de verrouillage et de trou (17, 18).

3. Support de cargaison selon l'une quelconque des revendications précédentes, **caractérisé en ce que** l'actionnement élastique et de verrouillage excentrique interagissant est agencé pour actionner la partie télescopique mobile (5) vers une position en saillie constante (II) lorsque ladite position de verrouillage excentrique (I) est obtenue au moyen dudit mécanisme de verrouillage (1).

4. Support de cargaison selon la revendication 2, **caractérisé en ce que** le ressort (8) est agencé pour activer le mécanisme de verrouillage (1) par une partie si bien que ladite position de verrouillage (I) est d'abord obtenue et qu'ensuite la position de verrouillage (I) du mécanisme de verrouillage est retenue avec la poignée (6) dans la position d'ouverture surélevée (III) préparée pour la préhension et destinée à être abaissée.

5. Support de cargaison selon l'une quelconque des revendications précédentes, **caractérisé en ce que** la poignée (6) peut être actionnée de manière élastique pour être toujours ramenée vers la position de verrouillage (I) de celle-ci.

6. Support de cargaison selon l'une quelconque des revendications précédentes, **caractérisé en ce que** le montant télescopique (4) est formé d'au moins parties télescopiques appariées (4, 5) ayant un profil carré ainsi que des manchons (19, 20) entourant le profil pour la fixation à des parties télescopiques respectivement fixes (12) et mobiles (5), et la poignée (6) étant agencée pour agir entre lesdits manchons (19, 20), ainsi que lesdites parties télescopiques respectives (4, 5) portent des butées d'extrémité de distribution de pression (30, 31) pour le montant télescopique (4).
